# EUROPÄISCHE PATENTSCHRIFT

(11) **EP 1 910 789 B1**
(45) Veröffentlichungstag und Bekanntmachung des Hinweises auf die Patenterteilung: **22.06.2011**
(21) Anmeldenummer: 06764158.9
(22) Anmeldetag: 13.07.2006
(51) Int. Cl.: G01K 15/00

(54) **AUSWERTEEINHEIT FÜR KONTINUIERLICHE THERMOELEMENTE**
EVALUATION UNIT FOR CONTINUOUS THERMOCOUPLES
UNITE D'EVALUATION POUR THERMOELEMENTS CONTINUS

(30) Priorität: 29.07.2005 DE 102005036407
(43) Veröffentlichungstag der Anmeldung: 16.04.2008
(73) Patentinhaber: ENDRESS + HAUSER WETZER GmbH + Co. KG, 87484 Nesselwang (DE)
(72) Erfinder: LUGLI, Roberto, 87484 Nesselwang (DE)
(74) Vertreter: Andres, Angelika Maria
(86) Internationale Anmeldenummer: PCT/EP2006/064213
(87) Internationale Veröffentlichungsnummer: WO 2007/012573

(56) Entgegenhaltungen:
- DE-A1- 19 606 826
- GB-A- 1 000 172
- US-A- 4 625 200

## Beschreibung

Die Erfindung betrifft eine Auswerteeinheit für kontinuierliche Thermoelemente.

Eine wichtige Größe in der Prozessmesstechnik ist die Temperatur. Vielfach werden zur Temperaturmessung Widerstandsthermometer (z. B. Pt100) oder Thermoelemente (z. B. Cu-CuNi) eingesetzt. Ein Temperaturmessgerät das für beide Messprinzipien ausgelegt ist, ist der Temperaturtransmitter iTemp TMT 162 der Fa. Endress+Hauser.

Herkömmliche Thermoelemente ermöglichen nur eine punktförmige Temperaturmessung, da sie eine geringe Ausdehnung besitzen.

Seit kurzer Zeit sind auch Thermolemente auf dem Markt, die eine kontinuierliche Temperaturüberwachung über längere Strecken (bis zu 100 m) erlauben. Solche kontinuierliche Thermoelemente bestehen aus einem Kabel mit einem Leiterpaar, das durch ein Halbleitermaterial isoliert ist. Tritt an einer beliebigen Stelle entlang des Kabels eine lokale Temperaturerhöhung auf, so wird an dieser Stelle eine Thermospannung erzeugt, die der lokalen Temperaturerhöhung entspricht. Diese Spannung wird über das Leiterpaar abgegriffen und in einer Auswerteeinheit ausgewertet. In der Auswerteeinheit kann so der Wert der Temperaturerhöhung bestimmt werden.

Kontinuierliche Thermoelemente arbeiten wie herkömmliche Thermoelemente nach dem Seebeck-Effekt.

Bisher wurden kontinuierliche Thermoelemente hauptsächlich als Brandmelder eingesetzt.

Problematisch bei kontinuierlichen Thermoelementen sind insbesondere mechanische Belastungen des Kabels, die zu Schäden am Leitungspaar oder am Halbleitermaterial führen können. Zu erwähnen sind hier z. B. mechanische Quetschungen, die unter Umständen zum Leitungsbruch führen können.

Neben den mechanischen Belastungen können auch fehlerhaftes Anschließen oder Korrosion an den Anschlüssen für die Leitungspaare Auswirkungen auf die Funktionsfähigkeit der Thermoelemente haben.

Aufgabe der Erfindung ist es deshalb eine Auswerteeinheit für kontinuierliche Thermolemente anzugeben, die diese Nachteile nicht aufweist, die insbesondere Beschädigungen am Kabel, Anschlussfehler und Korrosionsbildung bei den Anschlüssen des Kabels sicher erkennt.

Gelöst wird diese Aufgabe durch die Merkmale der unabhängigen Ansprüche. Gemäß Anspruch 1 ist die Auswerteeinheit für kontinuierliche Thermoelemente mit einer Verarbeitungseinheit zur Bestimmung der Thermospannung eines kontinuierlichen Thermoelements und einer ansteuerbaren Generatorschaltung zur Erzeugung einer Referenzgröße an mindestes einem Leiter des aus einem Leiterpaar bestehenden kontinuierlichen Thermoelements, verbunden, wobei die Referenzgröße eine Referenzspannung bzw. ein Referenzstrom ist, die während einer Testphase zugeschaltet wird und die Reaktion des kontinuierlichen Thermoelements auf die Referenzgröße in der Verarbeitungseinheit ausgewertet wird.

Anspruch 4 umfasst die folgenden Verfahrensmerkmale. Verfahren zum Überprüfen eines kontinuierlichen Thermoelements, gekennzeichnet durch folgende Verfahrensschritte:
Erzeugung einer Referenzgröße an mindestens einem Leiter des aus einem Leiter paar bestehenden Thermoelements
Messung der Reaktion des kontinuierlichen Thermoelements auf die Referenzgröße in einer Verarbeitungseinheit.

Vorteilhafte Weiterentwicklungen der Erfindung sind in den Unteransprüchen angegeben.

Die wesentliche Idee der Erfindung besteht darin, dass die Auswerteeinheit für kontinuierliche Thermoelemente eine ansteuerbare Generatorschaltung aufweist, die eine Referenzgröße an mindestens einem Leiter des Leiterpaares erzeugt und die Reaktion des kontinuierlichen Thermoelements auf die Referenzgröße in einer Verarbeitungseinheit ausgewertet wird, die normalerweise die Thermospannung auswertet.

Dadurch können z. B. Beschädigungen am Thermoelement, Anschlussfehler und Korrosion an den Anschlüssen leicht erkannt werden.

In einer alternativen Ausgestaltung sind die Verarbeitungseinheit und die Generatorschaltung mit unterschiedlichen Enden des Thermoelements verbunden.

In einer alternativen Ausgestaltung der Erfindung sind Verarbeitungseinheit und Generatorschaltung mit dem gleichen Ende des Thermoelements verbunden und am anderen Ende des Thermoelements ist ein Schalter vorgesehen, der während der Testphase geschlossen werden kann.

Nachfolgend ist die Erfindung anhand eines in der Zeichnung dargestellten Ausführungsbeispiels näher erläutert. Es zeigen:
Fig. 1 Blockschaltbild eines kontinuierlichen Thermoelements mit einer Auswerteeinheit nach einem ersten Ausführungsbeispiel
Fig. 2 Blockschaltbild eines kontinuierlichen Thermoelements mit einer Auswerteeinheit nach einem zweiten Ausführungsbeispiel

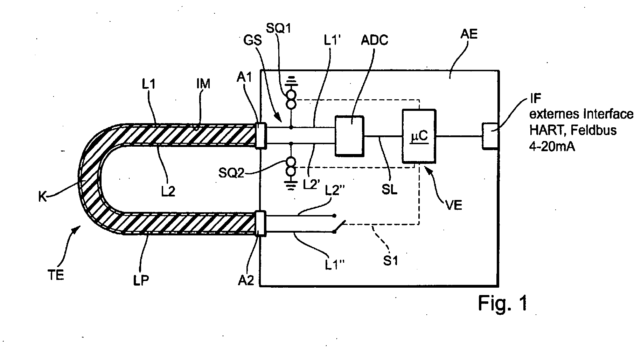

Fig. 1 zeigt eine Auswerteeinheit AE für kontinuierliche Thermoelemente nach einem ersten Ausführungsbeispiel. Das kontinuierliche Thermoelement TE besteht aus einem Kabel K mit einem Leiterpaar LP, das zwei Leiter L1, L2 aufweist, die durch ein Isolatormaterial IM voneinander getrennt sind. Das Leiterpaar LP dient zur Erfassung der Thermospannung, die in der Auswerteeinheit AE in einen Messwert umgewandelt wird.

Die Enden des Leiterpaars LP sind jeweils über einen ersten Anschluss A1 und über einen zweiten Anschluss A2 mit der Auswerteeinheit AE verbunden. Von der Anschlusseinheit A1 führen zwei Leitungsabschnitte L1'und L2' zu einem Analog-Digital-Wandler ADC.

Am gegenüberliegenden Ende des Leitungspaars LP, am Anschluss A2, führen zwei Leitungsabschnitt L1" und L2" zu einem Schalter S1.

Beide Leitungsabschnitte L1' und L2' sind in der Auswerteeinheit AE mit jeweils einer Quelle SQ1 bzw. SQ2 für eine Referenzgröße verbunden. Die beiden Quellen Q1 und Q2 bilden eine ansteuerbare Generatorschaltung GS, die zur Erzeugung einer Referenzgröße dient, wobei im vorliegenden Fall die Referenzgröße entweder Strom oder Spannung sein.

Wie aus Fig. 1 ersichtlich, sind die Verarbeitungseinheit VE und die Generatorschaltung GS am gleichen Ende des Thermoelements TE angeordnet.

Vom Analog-Digital-Wandler ADC führt eine Signalleitung SL zu einem Mikrocontroller µC, der über ein externe Kommunikationsschnittstelle S 1 an eine für die Prozessautomatisierungstechnik übliche Kommunikationsverbindung z. B. HART, 4-20 mA oder einem Feldbus anschließbar ist.

Über diese Kommunikationsverbindung können Messwerte an eine übergeordnete Einheit weitergeleitet werden.

Der Analog-Digital-Wandler AD und der Mikrocontroller µC bilden zusammen die Verarbeitungseinheit VE für das Signal des Thermoelements TE.

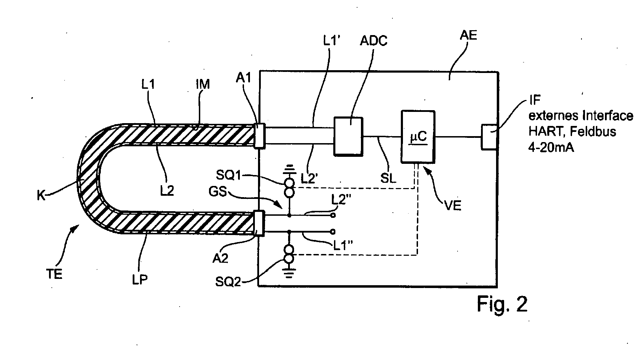

Das Ausführungsbeispiel gemäß Fig. 2 unterscheidet sich von dem im in Fig. 1 dargestellten Ausführungsbeispiel dadurch, dass der Schalter S1 entfällt und dass die Quellen SQ1 und SQ2 mit den beiden Leitungsabschnitten L1" und L2", d. h. an dem zum Anschluss A1 gegenüberliegenden Ende des Leiterpaars LP angeordnet sind. Verarbeitungseinheit VE und Generatorschaltung GS sind hier an verschiedenen Enden des Thermoelements TE angeordnet.

Nachfolgend ist die Funktionsweise eines kontinuierlichen Thermoelements nochmals kurz erläutert.

Mit Hilfe des Thermoelements TE ist eine kontinuierliche Temperaturerfassung über einen Bereich von mehreren Metern bis zu hundert Metern möglich. Erfolgt an einer Stelle des Thermoelements TE eine Temperaturerhöhung, so stellt sich hier eine Thermospannung TU am Leiterpaar LP ein, die im Wesentlichen durch diese Temperaturerhöhung bestimmt ist. Diese Temperaturerhöhung wird in der Auswerteeinheit AE erfasst und gegebenenfalls an die übergeordnete Einheit weitergeleitet. Bei einer starken Temperaturerhöhung ausgelöst durch ein Feuer kann ein Brandalarm generiert werden.

Eine sichere Funktion der gesamten Messeinrichtung setzt voraus, dass keine Beschädigungen am Kabel K vorhanden sind, dass keine Korrosion bei den Anschlüssen A1 bzw. A2 auftritt und dass das Kabel K richtig an der Auswerteeinheit AE angeschlossen ist.

Nachfolgend ist das erfindungsgemäße Verfahren näher erläutert.

In einer ersten Testsphase werden bei geöffnetem Schalter S1 die beiden Quellen SQ1 und SQ2 vom Mikrokontroller µC angesteuert. Beide Quellen arbeiten so, dass ein Gesamtstrom von 100nA fließt. Damit kann der Gesamtwiderstand des Isolatormaterials IM über die Spannungsdifferenz am Leiterpaar LP bestimmt werden. Typische Werte für den Gesamtwiderstand liegen zwischen 100 kΩ und 1 MΩ.

Bei einer Beschädigung des kontinuierlichen Thermoelements TE z. B. durch eine Quetschung, wie sie etwa beim Betreten des Kabels K durch eine Person, hervorgerufen werden kann, sinkt der Widerstandswerte auf 5 kΩ - 0 Ω, da der Abstand der Leiter L1 bzw. L2 im Bereich der Quetschung verringert wird. Im Extremfall können sich die beiden Leiter L1, L2 sogar berühren was zum Widerstandswert 0 Ω führt.

Wird eine derartige Widerstandsänderung über die Spannungsdifferenz in der Auswerteeinheit AE gemessen, so wird eine entsprechende Meldung erzeugt.

In einer zweiten Testsphase wird zusätzlich der Schalter S1 über den Mikrocontroller µC geschlossen. Hierdurch kann der Widerstand des Leiterpaars LP und der Anschlüsse bestimmt werden. Bei ordnungsgemäßen Anschlüssen und intaktem Leiterpaar LP liegt der Widerstandswert bei ca. 0 Ω.

Ein Widerstandswerte größer 10 kΩ deutet auf Korrosion der Anschlüsse hin. Ein Widerstandswert größer 100 kΩ ist ein Indiz für einen Leitungsbruch oder einen Fehlanschluss des Leiterpaars LP. In beiden Fällen wird eine entsprechende Meldung erzeugt.

Nach dem Abschalten der beiden Quellen SQ1 und SQ2 sowie dem Öffnen des Schalters S 1 ist die Testphase beendet und der normale Messbetrieb kann wieder aufgenommen werden. In der Regel kann nach einer Erholzeit (recovery time) von ca. 10 Sekunden der normale Messbetrieb wieder aufgenommen werden.

Das Ausführungsbeispiel gemäß Fig. 2 erlaubt durch Anlegen einer Spannung mit Hilfe der Generatorschaltung G1 ebenfalls in einfacher Weise die Bestimmung von Leitungsbrüchen oder auch von Korrosion.

## Patentansprüche

1. Auswerteeinheit für kontinuierliche Thermoelemente (TE) mit einer Auswerteschaltung (AS) zur Bestimmung der Thermospannung eines kontinuierlichen Thermoelements TE und einer ansteuerbaren Generatorschaltung (GS) zur Erzeugung mindestens einer Referenzgröße an mindestes einem Leiter des aus einem Leiterpaar (LP) bestehenden kontinuierlichen Thermoelements (TE), wobei die Referenzgröße eine Referenzspannung bzw. ein Referenzstrom ist, die während einer Testphase zugeschaltet wird und die Reaktion des kontinuierlichen Thermoelements(TE)auf die Referenzgröße in der Auswerteschaltung (AS) ausgewertet wird.

2. Auswerteeinheit nach Anspruch 1, **dadurch gekennzeichnet, dass** die Auswerteschaltung (AS) und die Generatorschaltung (GS) an den gegenüberliegenden Enden des kontinuierlichen Thermoelements (TE) angeordnet sind.

3. Auswerteeinheit nach Anspruch 1, **dadurch gekennzeichnet, dass** die Auswerteschaltung (AS) und die Generatorschaltung (GS) an einem Ende des kontinuierlichen Thermoelements (TE) angeordnet sind und am gegenüberliegenden Ende des kontinuierlichen Thermoelements ein Schalters angeordnet ist, der eine Verbindung der beiden Leiter (L1, L2) des Leiterpaares (LP) ermöglicht.

4. Verfahren zum Überprüfen eines kontinuierlichen Thermoelements (TE), **gekennzeichnet durch** folgende Verfahrensschritte: Erzeugung einer Referenzgröße an mindestens einem Leiter (L1, L2) des aus einem Leiterpaar (LP) bestehenden Thermoelements (TE) Messung der Reaktion des kontinuierlichen Thermoelements (TE) auf die Referenzgröße in einer Auswerteschaltung (AS).

5. Verfahren nach Anspruch 4, **dadurch gekennzeichnet, dass** ein Schalter vorgesehen ist, der eine Verbindung der beiden Enden des Leiterpaares (LP) ermöglicht und die Reaktion des kontinuierlichen Thermoelements (TE) bei offenem und geschlossenem Schalter erfolgt.

6. Verfahren nach einem der vorhergehenden Ansprüche, **dadurch gekennzeichnet, dass** über die Spannungsdifferenz am Leiterpaar der Gesamtwiderstand des kontinuierlichen Thermoelements (TE) bestimmt wird.

## Claims

1. Evaluation unit for continuous thermocouples (TE) with an evaluation circuit (AS) to determine the thermoelectric voltage of a continuous thermocouple TE and a controllable generator circuit (GS) to generate at least one reference variable at at least one wire of the continuous thermocouple (TE), which consists of a pair of wires (LP), where the reference variable is a reference voltage or reference current, which is switched on during a test phase and where the reaction of the continuous thermocouple (TE) to the reference value is evaluated in the evaluation circuit (AS).

2. Evaluation unit as per Claim 1, **characterized in that** the evaluation circuit (AS) and the generator circuit (GS) are arranged at the opposite ends of the continuous thermocouple (TE).

3. Evaluation unit as per Claim 1, **characterized in that** the evaluation circuit (AS) and the generator circuit (GS) are arranged at one end of the continuous thermocouple (TE) and that a switch is arranged at the opposite end of the continuous thermocouple which enables a connection between the two wires (L1, L2) of the wire pair (LP).

4. Method to check a continuous thermocouple (TE), **characterized by** the following steps: generation of a reference variable at at least one wire (L1, L2) of the thermocouple (TE) consisting of a wire pair (LP); measurement of the reaction of the continuous thermocouple (TE) to the reference variable in an evaluation circuit (AS).

5. Method as per Claim 4, **characterized in that** a switch is provided that enables a connection between the two ends of the wire pair (LP) and that the continuous thermocouple (TE) responds when the switch is opened and closed.

6. Method as per one of the previous claims, **characterized in that** the total resistance of the continuous thermocouple (TE) is determined via the change in voltage at the wire pair.

## Revendications

1. Unité d'évaluation pour thermocouples continus (TE) avec un circuit d'évaluation (AS) destiné à la détermination de la tension thermique d'un thermocouple continu (TE) et un circuit de générateur (GS) activable pour la génération d'au moins une grandeur de référence sur au moins un conducteur du thermocouple continu (TE) constitué d'une paire de conducteurs (LP), la grandeur de référence étant une tension de référence ou un courant de référence, qui est appliqué pendant une phase de test, et la réaction du thermocouple continu (TE) à la grandeur de référence étant évaluée dans le circuit d'évaluation (AS).

2. Unité d'évaluation selon la revendication 1, **caractérisé en ce que** le circuit d'évaluation (AS) et le circuit de générateur (GS) sont disposés aux extrémités opposées du thermocouple continu (TE).

3. Unité d'évaluation selon la revendication 1, **caractérisé en ce que** le circuit d'évaluation (AS) et le circuit de générateur (GS) sont disposés à une extrémité du thermocouple continu (TE) et qu'à l'extrémité opposée du thermocouple continu (TE) est disposé un interrupteur, qui permet une liaison des deux conducteurs (L1, L2) de la paire de conducteurs (LP).

4. Procédé destiné à la vérification d'un thermocouple continu (TE), **caractérisé par** les étapes de procédé suivantes : génération d'une grandeur de référence sur au moins un conducteur (L1, L2) du thermocouple (TE) constitué d'une paire de conducteurs (LP), mesure de la réaction du thermocouple continu (TE) à la grandeur de référence dans un circuit d'évaluation (AS).

5. Procédé selon la revendication 4, **caractérisé en ce qu'**est prévu un interrupteur, qui permet une liaison des deux extrémités de la paire de conducteurs (LP) et **en ce que** la réaction du thermocouple continu (TE) intervient lorsque l'interrupteur est ouvert et fermé.

6. Procédé selon l'une des revendications précédentes, **caractérisé en ce qu'**est déterminée, à travers la différence de tension au niveau de la paire de conducteurs, la résistance totale du thermocouple continu (TE).
